Europäisches Patentamt

European Patent Office

Office européen des brevets

(19)

(11) Publication number: **0 043 667**
**B1**

(12) **EUROPEAN PATENT SPECIFICATION**

(45) Date of publication of patent specification: **06.06.84**

(51) Int. Cl.³: **A 23 F 5/48**

(21) Application number: **81302792.7**

(22) Date of filing: **22.06.81**

(54) Process for preparing a coffee volatiles concentrate.

(30) Priority: **27.06.80 US 163609**
**17.06.81 US 274345**

(43) Date of publication of application:
**13.01.82 Bulletin 82/2**

(45) Publication of the grant of the patent:
**06.06.84 Bulletin 84/23**

(84) Designated Contracting States:
**BE DE FR GB IT NL SE**

(56) References cited:
**EP - A - 0 001 850**
**EP - A - 0 006 646**
**FR - A - 614 919**
**FR - A - 2 218 059**
**FR - A - 2 340 053**
**GB - A - 1 466 881**
**US - A - 3 035 922**
**US - A - 3 554 761**
**US - A - 4 092 436**

(73) Proprietor: **THE PROCTER & GAMBLE COMPANY**
**301 East Sixth Street**
**Cincinnati Ohio 45202 (US)**

(72) Inventor: **Zaunbrecher, Judith Ann**
**6249 Kenwood Hills Drive**
**Cincinnati Ohio 45227 (US)**
Inventor: **Crooks, Richard Glen**
**44T Versailles**
**Cincinnati Ohio 45240 (US)**

(74) Representative: **Brooks, Maxim Courtney et al,**
**Procter & Gamble (NTC) Limited Whitley Road**
**Longbenton**
**Newcastle-upon-Tyne NE12 9TS (GB)**

Courier Press, Leamington Spa, England.

## Description

This invention relates to a process for preparing an improved soluble coffee product which has a brew-like aroma and flavor.

There are many processes for producing soluble coffee products. For the most part, these methods have been directed toward the provision of a coffee product capable of duplicating the desired flavor qualities of freshly prepared roast and ground coffee.

Various processes have been described as producing these soluble coffee products. Such methods are described in U.S. 3,035,922, issued to Mook et al, 1962 and U.S. 4,072,761, issued to Margolis et al, 1978.

Methods for producing an improved soluble coffee product having the favorable physical characteristics and preferred flavor attributes of freshly brewed roast and ground coffee are described in U.S. 3,717,472, issued to Strobel (1973), U.S. 3,997,685, issued to Strobel (1976), U.S. 4,100,305, issued to Gregg (1978), and U.S. 4,100,306, issued to Gregg et al (1978). These patents describe a process for desorbing the aroma and flavor volatiles from roast and ground coffees. The Strobel patents prepare aroma and flavor concentrates by pulsing or continuously passing wet steam through roast and ground coffee which is in a column. The coffee substrate is preferably of a very fine grind. If very coarse coffee is used, a strong, harsh or stringent flavor is said to be produced.

The Gregg patents describe a method of steam stripping and recovering desirable volatiles from roast and ground coffee particles in a mechanically fluidized bed. The coffee particle size is from 5 to 800 microns. In order to extract the solubles from this coffee it must be slurry extracted which is an expensive process.

It is an object of the present invention to provide a process for preparing a soluble coffee product having flavor qualities preferred over commercially manufactured instant coffee. The process of the present invention will produce such a coffee via a gentle, but thorough steam distillation operation. Moreover, the process of the present invention utilizes roast and ground coffee which can then be extracted in a conventional manner.

These and other objects and advantages of the present invention will become apparent from the detailed description provided hereinafter.

### Detailed description of the invention

A process for preparing a highly aromatic soluble coffee product having a stronger, more brew-like character is disclosed. The process comprises:

(1) wetting roast and ground coffee having a particle size of 1000 microns to about 3500 microns with from 0.1 to 0.9 parts of water per parts of coffee;

(2) desorbing the wet roast and ground coffee in a fluidized bed, said wet roast and ground coffee having a moisture content of 15% to 65%, a temperature of from 0°C (32°F) to 52°C (125°F), and a pressure of from 5 to 100 mm;

(3) condensing the volatiles separately at temperatures of from 0°C (32°F) to 52°C (125°F) and at temperatures below −18°C (0°F), and pressures of from 5 to 8,000 mm of mercury; and

(4) combining the two condensates with soluble coffee to form a coffee volatiles concentrate having a solids concentration of from 20% to 65%.

The desorbed roast and ground coffee may be extracted to form a coffee soluble solution from about 13% to about 26% solid concentration. This extract may be dried in a conventional manner to provide a soluble coffee product.

The condensates are added to a soluble coffee product in a manner in which the important aroma and flavor volatiles are retained. This may be done by adding coffee solubles to the aqueous condensate to produce a coffee extract having from about 20% to about 65% solubles, and then adding the frost to this at a cold temperature so that the important aroma and flavor volatiles do not evaporate.

The process of this invention represents an improvement over the devolatilization of the roast and ground coffee processing described in the Strobel and Gregg patents. The key to the process of this invention is the subjection of roast and ground coffee to a unique combination of devolatilization and conventional extraction techniques.

Gregg requires the use of slurry extraction to remove the soluble materials remaining in the desorbed coffees. Slurry extraction is expensive and difficult to accomplish. Strobel's process requires more expensive equipment to achieve the same results.

The process of the present invention has applicability to a variety of coffees, including blends of coffees. These may be classified for convenience and simplification as low-grade, intermediate grade and high-grade coffees. Suitable examples of low-grade coffees include the natural Robustas such as the Ivory Coast Robustas and Angola Robustas; and the natural Arabicas such as the natural Perus and natural Equadors. Suitable intermediate-grade coffees include the natural Arabicas from Brazil such as Santos, Paranas and Minas; and natural Arabicas such as Ethiopians. Examples of high-grade coffees include the washed Arabicas such as Mexicans, Costa Ricans, Columbians, Kenyas, and New Guineas. Other examples and blends thereof are known in the art and illustrated, for example, in U.S. 3,615,667 (issued October 26, 1971 to Joffe).

Preferably, blends of intermediate and high-grade Arabicas will be used.

The coffees are roasted in a conventional manner, either batchwise or continuously. Typical roasting equipment and methods for roasting coffee beans are described, for example, in Sivetz & Foote, *Coffee Processing Technology*, Avi Publishing Co., (Connecticut 1963, Vol. 1 at pp. 203—266).

Highly preferred roasting techniques for use herein are those which retain the volatiles within the roasted coffee. Such techniques include fast roasting followed by liquid nitrogen quenching of the roasted beans.

The roasted coffee is ground to the desired particle size using any conventional grinding equipment. Typical grinding equipment is described, for example, in Sivetz & Foote, *supra*, pp. 239—250. A highly preferred grinding technique is cold grinding where the beans are embrittled by cooling with liquid carbon dioxide or liquid nitrogen.

In order to utilize the devolatilized roast and ground coffee in conventional extraction columns, the coffee must have a minimum particle size of 1000 microns. Typically, the average coffee particle size will range from 1000 to 3500 microns, preferably from about 2400 to 2800 microns.

A typical particle size distribution when measured on standard U.S. sieves is:

| Sieve size | Percent |
|------------|---------|
| On 6       | 39      |
| On 8       | 36      |
| On 20      | 21      |
| Through 20 | 4       |

The roast and ground coffee is then wet with from 0.1 to 0.9 parts of water per 1 part of coffee. The wetting operation may be accomplished by mixing the roast and ground coffee with the water or by adding ice to the roast and ground coffee.

The temperature of the water used to wet the roast and ground coffee can be from about 0°C (32°F) to 52°C (125°F), preferably from 0°C (32°F) to 44°C (40°F). Control of the water temperature is important since high temperatures will degrade the coffee flavors and aroma.

The wetted coffee particles are subjected to mechanical fluidization during the steam stripping or devolatilization step. Mechanical fluidization provides uniform devolatilization by allowing intimate contact of the steam with the coffee particles. The operation can also be conducted at lower temperatures and under vacuum without excessive pressure drops across the coffee bed if the coffee remains in a state of mechanical fluidization.

The term "fluidization" refers to a process where fine, solid particles are made to behave in a fluid-like manner. A dense phase fluidized bed, such as a bed of particulated coffee solids, behaves much like that of a boiling liquid.

Mechanical fluidization is a rapid agitation with a mechanical mixing system which provides a fluidized bed of substrate. In mechanical fluidization, the substrate is continuously hurled and whirled so as to create the fluidized system normally formed by gaseous fluidization.

To achieve mechanical fluidization in the process of the present invention, certain types of mixers are used. For example, one suitable mixer employs an impeller in the form of a centrally rotating shaft having a plurality of radially extending arms attached thereto. Crescent-shaped scoops are attached to the ends of the arms. See U.S. Patent 3,273,863 to Lodige et al, issued September 20, 1966, which discloses a mixer employing an impeller having such crescent-shaped scoops. Another suitable mixer employs an impeller which has scoops in the form of double-bladed plows. See U.S. Patent 3,018,059 issued January 23, 1962, 3,027,102 issued March 27, 1962, and 3,162,428 issued December 22, 1964 to Lodige et al.

Typically, the mixer can be filled to about 20% to about 70% of its capacity with the wetted roast and ground coffee.

The fluidized wetted coffee particles are devolatilized at a bed temperature of from 0°C (32°F) to 52°C (125°F) and an absolute pressure of from 5 mm to 100 mm Hg. The moisture level of the coffee particles during the desorption process must be maintained at a level of from 15% to 65%, and preferably from 20% to 55%, most preferably from 30% to 50%. The maintenance of this moisture level is critical to effectively desorb the volatiles from the coffee.

This process described herein can remove and recover from 60% to 100% of the volatiles from the roast and ground coffee.

The moisture level is best maintained by passing steam through the fluidized bed of roast and ground coffee.

The mechanically fluidized wetted coffee particles are contacted with from about 0.05 to about 0.50 parts of steam under an absolute pressure of from about 5 to about 100 mm of mercury. The temperature of the steam is controlled so that the coffee bed is at a temperature of from −12°C (10°F) to 52°C (125°F). Preferably, this steam/coffee mixture will be at a temperature of from 21°C (70°F) to 52°C (125°F) and the pressure will be from about 20 to about 100 mm of mercury.

The contact time for the steam varies from about 10 to about 120 minutes. The time will be dependent upon particle size distribution of the coffee being desorbed.

The wetting and steam-stripping can be done simultaneously or sequentially. As noted above, the key to this process is the maintenance of the bed moisture level above 15%, for sufficient time to devolatilize the coffee.

The volatiles-laden steam which is generated by the devolatilization or desorption of the roast and ground coffee is drawn from the mixing device and collected.

The amount of water collected should be from .05 to 0.50 parts of water per part of coffee desorbed.

These volatiles are condensed in a two-stage operaton. The first condensation consists of passing the volatiles vapor stream through a condenser which reduces the stream temperature to 0°—52°C (32—125°F), preferably 0°C (32°F) to 21°C (70°F), most preferably 0°C (32°F) to 7°C (45°F). This procedure removes the water and a fraction of the volatiles from the vapor stream. This first condensation is at a pressure of 5 to 100 mm of mercury.

The remaining volatile and flavor compounds and the desorbed carbon dioxide are then collected as a frost in a cryogenically cooled trap. This trap must be contained at a temperature below —73°C (—100°F) to about —196°C (—320°F) and an absolute pressure of from 1 to 100 mm of mercury.

Alternatively, the volatiles are first condensed as above by passing the volatile laden stream through a condenser at 0—52°C (32—125°F), preferably 0—7°C (32°—45°F), and the water collected. The remaining fraction is compressed to pressures of from 760 to 8000 mm Hg and collected in a cold trap at temperatures of from —18°C (0°F) to —196°C (—320°F).

The first condensate can be cryofied by mixing it with liquid nitrogen in a high shear mixer. This cryofied extract can be used as a substrate on which the second fraction of the condensate is collected. The cryofied extract would be held at temperatures of from —73°C (—100°F) to —196°C (—320°F).

The desorbed wet roast and ground coffee can be charged to conventional coffee extraction columns at about 90—98% of the normal loading weight on a dry basis because of the water which swells the coffee from 2%—10%.

Any conventional percolation equipment and processing can be used. For a description of percolation extraction methods, see Sivetz & Foote, infra, pp. 261—319.

Because the roast and ground coffee is pre-wetted, the draw-off ratio must be adjusted to achieve the same yield of solids. The draw-off ratio is the amount of extract withdrawn from the fresh extraction column during one cycle compared to the average dry weight of coffee in the individual extraction columns. Preferably, a draw-off ratio of about 2.3 to about 3.2 is employed. This gives a solids yield of about 13% to about 26% by weight. Typically, when the same load of dry coffee is charged into the extraction column, a draw-off ratio of about 2.1 is employed.

Another method of preparing a soluble coffee extract which comprises a two-stage countercurrent extraction is described in U.S. 3,700,466 issued to Bergeron et al (October 1972). In this process one stage is a hydrolyzing stage and is operated at temperatures of from 166°C (330°F) to 179°C (355°F). The second stage is a cold, fresh extraction stage operated at temperatures of from 0°C (32°F) to 82°C (180°F) and at a pressure of from not less than about 1379 kPa (200 psig). This process may also be used herein.

After emission from the extraction system, the extract contains from about 13% to about 26% coffee solubles. The extract is preferably concentrated to at least 35% solubles concentration and preferably up to 50% solubles concentration, and then dried by well-known spray drying, freeze drying, or drum drying techniques.

The condensed volatiles and volatile-laden steam, are combined with soluble coffee materials to produce a highly aromatic and flavorful soluble coffee product. The combination of the condensates with the solubles can be accomplished by several methods.

One method involves adding from about 20% to about 50% soluble solids to the aqueous condensate (the first fraction) to produce a soluble coffee extract. This extract is then cryofied by mixing with liquid nitrogen under high shear and added to the frost or second condensate at cryogenic temperatures.

A second method involves adding solids to the frost and equilibrating these materials. This frost/solids mixture is then added to the aqueous condensate to produce a coffee extract having from 20% to about 50% solids. This aqueous extract can then be freeze dried.

A third method involves the collection of the frost and cryofied aqueous condensate to which coffee solids are added later, or on cryofied aqueous condensate to which from 25% to 50% coffee solubles have been added.

The extract condensate mixture is prepared at cryogenic temperatures, i.e. —73°C (—100°F) to about —196°C (—320°F). This mixture is then equilibrated to allow the carbon dioxide to volatilize while retaining the key volatiles which make up the frost and condensate.

The equilibration can be accomplished at atmospheric pressure or at pressures up to 8000 mm mercury (1034 kPa) (150 psi). The key is to keep the solution at or above the sublimation temperature of carbon dioxide for only the length of time required to remove the carbon dioxide. As soon as the carbon dioxide is removed, the extract should be processed through freeze drying to minimize the loss of the aroma and flavor materials.

Atmospheric pressure equilibration is conducted under the following conditions. The cryofied extract and frost mixture which is usually at liquid nitrogen temperatures, i.e. —196°C (—320°F), is placed in a container which is open to the atmosphere. The mixture is allowed to equilibrate that is, the carbon dioxide is allowed to sublime from the mixture. At atmospheric pressure the carbon dioxide sublimes at a temperature of about −78°C (−108°F). It is preferable to keep the vessel containing the cryofied extract and frost at temperatures below about −40°C (−40°F), preferably below about −62°C (−80°F), during this sublimation process.

During the sublimation of the carbon dioxide, the temperature of the extract will remain −78°C (−108°F). The temperature of the extract must be carefully monitored.

Once the temperature of the cryofied extract starts to rise above −78°C (−108°F), the processing, i.e. the melting and mixing of the materials prior to freeze drying, should be started. The atmospheric sublimation usually requires about 24 hours.

The pressure equilibration is conducted somewhat differently. The cryofied extract/ frost mixture is placed in a pressure vessel at −196°C (−320°F). The pressure in the vessel is allowed to build up to 8000 mm mercury. This is usually accomplished by warming the vessel. The carbon dioxide is then vented from the vessel to maintain the pressure. The heat of vaporization will keep the cryofied extract/frost mixture cold. Again, the temperature of the cryofied extract/frost mixture is monitored such that as soon as it begins to rise above the sublimation point of carbon dioxide, the equilibration is stopped, the product melted under carefully controlled conditions to form a homogeneous mixture, then freeze dried.

The cryofied extract/frost mixture is melted after equilibration at as close to the melt temperature as possible, preferably at the melt temperature. The extract/frost mixture is melted in a sealed vessel with agitation. It is advantageous to keep the vessel sealed so that the aroma/ flavor volatiles will not be lost during the melting/mixing operation.

The extract/frost mixture is then slowly frozen to about −40°C (−40°F) in order to produce large ice crystals. This mixture is then ground to the desired particle size range and freeze dried.

Conventional freeze drying may be used. In order to retain the volatiles within the extract/ frost mixture during freeze drying, it is very important that the particles not be allowed to melt during the freeze-drying operation. Therefore, the temperature must be controlled to maintain the frozen material in a solid state. The final moisture level is from about 1% to about 7%.

The freeze-dried material is the aroma/flavor concentrate which can be mixed with other soluble coffees to produce a soluble coffee beverage.

If a more concentrated aroma/flavor concentrate is preferred, the condensates can be mixed with lesser amounts of soluble coffees.

However, it is then necessary to freeze-concentrate or evaporatively concentrate these materials to a coffee extract soluble concentration of 25% to 50% which is the desired range for freeze drying.

Example I

21 kg (Forty-six pounds) of a green coffee blend consisting of washed Arabicas are batch roasted in a Probat Roaster to photovolt color of 70. A minimal amount of water is used to quench the roasting process 0.9 l (0.25 gal). Within 5 minutes of discharge from the roaster the coffee is then additionally quenched with about 21 kg (46 pounds) of liquid nitrogen. This operation serves to cool the whole roasted beans to a maximum temperature of −4°C (−40°F).

The cold embrittled beans are then ground using a precooled hammermill type grinder (Fitz[R] Mill). The particle size distribution of the roast and ground coffee is:

Sieve size

| | |
|---|---|
| On 6 | 39 |
| On 8 | 36 |
| On 20 | 21 |
| Through 20 | 4 |

The yield through grinding is about 18 kg (40 pounds) of roasted and ground coffee. Most of this loss is due to shrinkage during the roasting operation.

The 18 kg (40 pounds) of cold roast and ground coffee are loaded into a mechanical mixer (Littleford Model FM-130D) fitted to run under vacuum. The system is then evacuated to an absolute pressure of about 20 mm of mercury. At this time, 8kg (17 pounds) of 4°C (40°F) water are sprayed at a uniform rate over a 10-minute period into the mixer and onto the mechanically fluidized bed of roast and ground coffee. This process serves to increase the moisture content of the coffee from about 2% to about 32%.

At the conclusion of the water wetting operation, steam flow is begun into the mixer at a uniform rate over a 65 minute period so that the coffee is contacted with about 4 kg (9.2 pounds) of steam. During the 75 minutes desorption cycle time the pressure within the mixer is controlled to from 20 mm to 100 mm of mercury so that the vapor temperature is maintained from about 21°C (70°F) to 52°C (125°F).

The volatiles and carbon dioxide released from the coffee during the desorption process and the steam passed through the mixer are condensed in a two-stage operation. This stream is first passed through a heat exchanger which cools the vapor to about 2°C (35°F). Most of the water and some of the volatiles are condensed by this operation. The non-condensed volatiles and carbon dioxide are collected as a frost by subsequent condensation in a liquid nitrogen cooled trap.

The pressure within the heat exchanger is varied in conjunction with the pressure in the desorption vessel. The pressure within the cryogenic trap however, is controlled at a uniform 10 mm of mercury.

At the conclusion of the 75 minute desorption cycle, the water condensed at 2°C (35°F) about 3.6 kg (8.0 lbs) is mixed with about 2 kg (4.31 lbs) of spray-dried soluble coffee powder to form a 35% solids extract. This extract is then added to liquid nitrogen using a high-speed mixer (Cheemineer). This cryofied extract is added to the frost and placed in a —40°C (—40°F) freezer for 24 hours or until the temperature of the mixture rises to just above —78°C (—108°F). This insures that all the carbon dioxide has been vented, i.e. sublimed from the system.

The extract/frost mixture is then melted, mixed to produce a homogeneous mixture and refrozen at temperatures below —32°C (—25°F) for freeze drying. The mixture is ground (at —40°C (—40°F)) and sieved so that the particles pass through an 8-mesh screen and are retained on a 20-mesh screen. This material is then freeze dried in a conventional batch freeze-drying unit for 7 hours using a steam temperature of 32°C (90°F).

The roast and ground coffee desorbed to added solubles ratio is 9.3:1.

The GC counts for this product are about 1,950,000 as measured by the method described below. About 32% of the area (636,100 counts) of the gas chromatograph appear within the first 11 minutes of the spectrum. This part of the gas chromatograph is dominated by two peaks, one having about 3.5 minutes and one having about 5.8 minutes retention time.

Gas chromatograph analysis of an aroma/flavor concentrate

| Retention time | Area (counts) | Area (%) |
|---|---|---|
| 0.77 | 1455 | 0.07 |
| 0.88 | 392 | 0.02 |
| 1.00 | 338 | 0.02 |
| 1.15 | 289 | 0.02 |
| 1.57 | 11330 | 0.06 |
| 2.89 | 7558 | 0.4 |
| 3.54 | 158700 | 8.1 |
| 5.29 | 9550 | 0.5 |
| 5.83 | 341200 | 17.5 |
| 6.07 | 18350 | 0.9 |
| 6.55 | 36310 | 1.9 |
| 7.27 | 13690 | 0.7 |
| 7.65 | 22740 | 1.2 |
| 8.14 | 14210 | 0.7 |
| 10.89 | 2698 | 0.1 |
| 13.05 | 123900 | 6.4 |
| 13.56 | 25760 | 1.3 |
| 14.78 | 62460 | 3.2 |
| 15.81 | 124900 | 6.4 |
| 17.68 | 74840 | 3.8 |
| 18.77 | 348200 | 17.8 |
| 19.90 | 548100 | 28.2 |
| Total | 1946970 | |

For comparative purposes, the gas chromatograph of soluble coffee used to make the aroma/flavor concentrate is reproduced below.

| Retention time | Area (counts) | Area (%) |
|---|---|---|
| 0.77 | 1550 | 1.98 |
| 0.88 | 370 | 0.47 |
| 1.57 | 3052 | 3.90 |
| 5.83 | 2629 | 3.38 |
| 13.05 | 38200 | 48.87 |
| 15.81 | 11300 | 14.46 |
| 19.90 | 21060 | 26.94 |

The devolatilized roast and ground coffee remaining after the desorption process is charged to a conventional extraction column. Because of the high moisture content of this material (about 35%), a draw-off ratio of 2.7 is used. The extract emanating from the columns contains about 16.5% solids concentration. Evaporation is used to increase the solids concentration to 48% prior to spray drying.

Gas chromatography analysis

A suitable technique for measuring the coffee volatiles of the aroma/flavor concentrate produced by the process of the invention is gas chromatography. The flame ionization gas chromatograph analytical measurement herein measures groups of organic compounds in a gas headspace or void-space sample from a septum bottle containing a solution of the soluble coffee. The scale is graduated in microvolt-seconds (referred to herein as "counts") which is a measure of the area under each intensity curve. The results are reported as an integration of the total area under the curve of the compounds which have a retention time of less than 11 minutes, those which elute first, and also for the total area under the curve of the entire curve.

A. Principle of operation

The chromatograph comprises a 1.8 m (6 foot) Porasil D 80/100 mesh column of 0.6 cm (1/4 inch) diameter and is housed in an oven section for temperature programming. Porasil-D® is a porous silica bed substrate. The column is packed with a uniform sized solid called the solid support but is not coated with a nonvolatile liquid (called the substrate). A hydrogen flame detector is used at the outlet port. An electrometer receives the output signal from the flame detector and amplifies it into a working input signal for an integration. The integrator both sends a display signal to a recorder to print out the response curve and electronically integrates the area under the curves.

The gas sample is injected into a heated injection port, and is immediately swept into the packed column by a carrier gas flow. The gas mixture is then separated into a number of peaks while proceeding through the column and into the detector. The detector then ionizes the sample and generates an electrical signal proportional to the concentration of the materials in the carrier gas. The ionized gases and carrier gas are then vented from the unit.

B. Specific equipment and conditions

A Hewlett Packard gas chromatograph (Model 5830A), and printing integrator (Model 18850A), were used. Nitrogen pressure in the column is approximately 345 kPa (50 psig) with a flow rate of 55 ml/min. Air pressure of 276 kPa (40 psig) is used to flush out the detector and support combustion. An initial oven temperature of 100°C is used and temperature programmed up to 220°C at 8°C/min. The hydrogen is supplied from a gas cylinder regulated at 9 kg/6.89476 kPa (20 lbs psig).

C. Analytical procedure

Each peak is measured in counts, the counts being first measured by the flame detector and then both integrated and recorded. The peaks are identified by the retention time on the column.

The recorder was synchronized with the integrator as follows:

1. Calibration

A standard methane gas is used to precisely set the flame ionization response. Prior to analyzing the samples, a 1 cc sample of gas is obtained from a gas cylinder (0.5% by weight of $CH_4$). The gas sample is at a pressure of 28 kPa (4.0 psig). The gas sample is syringed into the inlet port of gas chromatograph. The attentuation of the recorder is set at 2↑(5). The total counts when the procedure is repeated three times average between 2,675,000 to 2,725,000 total counts. If the average is not within the specified range, the hydrogen flow rate is adjusted.

2. Sample analysis

A one percent solution of the soluble coffee is made up in a 125 ml septum bottle. The solution is prepared using 34 g sodium sulfate, 80 ml distilled water, and 0.8 gm of the soluble coffee or aroma/flavor concentrate. The solution is sealed in the bottle using a rubber septum. The bottle containing the solution is heated in boiling water for 15 to 30 minutes. It is magnetically stirred during the heating.

A 1 cc sample of the aromatic atmosphere of the septum bottle headspace/voidspace is taken using the same type of syringe used for the methane standard sample. The gas sample is then injected into the inlet part of the gas chromatograph. The recorder automatically integrates the area under the curve in counts (microvolt-seconds).

**Claims**

1. A process for producing a coffee volatiles concentrate from roast and ground coffee characterized by:—

(1) wetting roast and ground coffee having a particle size of from 1000 microns to 3500 microns with from 0.1 to 0.9 parts of water per part of coffee;
(2) desorbing the wetted roast and ground coffee in a fluidized bed, said wetted coffee being at a moisture level of from 15% to 65%, at a temperature of from 10°F (−12°C) to 125°F (52°C) and a pressure of from 5 mm to 100 mm Hg;
(3) condensing the volatiles in two fractions, the first at a temperature of from 32°F (0°C) to 125°F (52°C) at a pressure of from 5 to 100 mm of mercury, and the second either at a temperature below −100°F (−73°C) at an absolute pressure of from 1 to 100 mm of mercury, or at a temperature between 0°F (−18°C) and −320°F (−196°C) at an absolute pressure of from 760 mm to 8000 mm of mercury, and
(4) combining the two condensates with soluble coffee to form a coffee volatiles concentrate having a solids concentration of from 20% to 65%.

2. A process according to Claim 1 characterized by the additional step of extracting the desorbed roast and ground coffee to form a coffee solubles solution having from 13% to 26% solids concentration.

3. A process according to Claim 1 or 2 characterized in that the moisture level of the wetted coffee during the desorbing step (2) is between 20% and 55%, preferably 30% and 50%.

4. A process according to any of Claims 1 to 3 characterized in that the desorbing step (2) comprises contacting the wetted roast and ground coffee with from 0.05 to 0.5 parts of steam, at a pressure of from 5 mm to 100 mm of Hg and at temperatures of from 10°F (−12°C) to 125°F (52°C).

5. A process according to any of Claims 1 to 4 characterized in that the temperature of the wetted fluidized bed of the wetted coffee is maintained at a temperature of between 70°F (21°C) and 125°F (52°C) and the pressure is maintained at from 20 mm to 100 mm mercury.

6. A process according to any of Claims 1 to 5 characterized in that the condensation of the first fraction of the volatiles is at a temperature of from 32°F (0°C) to 70°F (21°C).

7. A process according to Claim 6 characterized in that the condensation of the first fraction of the volatiles is at a temperature of 32°F (0°C) to 45°F (7°C).

8. A process according to any of Claims 1 to 7 characterized by the additional step of equilibrating the coffee volatiles concentrate to remove the carbon dioxide.

9. A process according to Claim 8 characterized by the additional step of freeze drying the coffee volatiles concentrate to a moisture level of from 1% to 7%.

## Patentansprüche

1. Verfahren zur Herstellung eines Konzentrats aus flüchtigen Kaffeestoffen aus geröstetem und gemahlenem Kaffee, gekennzeichnet durch

(1) Benetzen von geröstetem und gemahlenem Kaffee mit einer Teilchengröße von 1000 Mikron bis 3 500 Mikron mit 0,1 bis 0,9 teilen Wasser je Teil Kaffee;

(2) Desorbieren des benetzten gerösteten und gemahlenen Kaffees in einem Wirbelbett, wobei der benetzte Kaffee einen Feuchtigkeitsgehalt von 15% bis 65% aufweist bei einer Temperatur von 10°F (−12°C) bis 125°F (52°C) und einem Druck von 5 mm bis 100 mm Hg;

(3) Kondensieren der flüchtigen Stoffe in zwei Fraktionen, die erste bei einer Temperatur von 32°F (0°C) bis 125°F (52°C) bei einem Druck von 5 bis 100 mm Hg und die zweite entweder bei einer Temperatur unter −100°F (−73°C) bei einem absoluten Druck von 1 bis 100 mm Hg oder bei einer Temperatur zwischen 0°F (−18°C) und −320°F (−196°C) bei einem absoluten Druck von 760 mm bis 8 000 mm Hg und

(4) Vereinigen der beiden Kondensate mit löslichem Kaffee unter Bildung eines Konzentrats aus flüchtigen Kaffeestoffen mit einer Feststoffkonzentration von 20% bis 65%.

2. Verfahren nach Anspruch 1, gekennzeichnet durch die zusätzliche Stufe des Extrahierens des desorbierten gerösteten und gemahlenen Kaffees unter Bildung einer Lösung löslicher Kaffeestoffe mit einer Feststoffkonzentration von 13% bis 26%.

3. Verfahren nach Anspruch 1 oder 2, dadurch gekennzeichnet, daß der Feuchtigkeitsgehalt des benetzten Kaffees während der Desorbierungsstufe (2) zwischen 20% und 55%, vorzugsweise 30% und 50% beträgt.

4. Verfahren nach einem der Ansprüche 1 bis 3, dadurch gekennzeichnet, daß die Desorbierungsstufe (2) das Kontaktieren des benetzten gerösteten und gemahlenen Kaffees mit 0,05 bis 0,5 Teilen Dampf bei einem Druck von 5 mm bis 100 mm Hg und bei Temperaturen von 10°F (−12°C) bis 125°F (52°C) umfaßt.

5. Verfahren nach einem der Ansprüche 1 bis 4, dadurch gekennzeichnet, daß die Temperatur des benetzten Wirbelbetts des benetzten Kaffees auf zwischen 70°F (21°C) und 125°F (52°C) und der Druck auf 20 mm bis 100 mm Hg gehalten wird.

6. Verfahren nach einem der Ansprüche 1 bis 5, dadurch gekennzeichnet, daß die Kondensation der ersten Fraktion der flüchtigen Stoffe bei einer Temperatur von 32°F (0°C) bis 70°F (21°C) erfolgt.

7. Verfahren nach Anspruch 6, dadurch gekennzeichnet, daß die Kondensation der ersten Fraktion der flüchtigen Stoffe bei einer Temperatur von 32°F (0°C) bis 45°F (7°C) erfolgt.

8. Verfahren nach einem der Ansprüche 1 bis 7, gekennzeichnet durch die zusätzliche Stufe des Äquilibrierens des Konzentrats aus flüchtigen Kaffeestoffen, um Kohlendioxid zu entfernen.

9. Verfahren nach Anspruch 8, gekennzeichnet durch die zusätzliche Stufe des Gefriertrocknens des Konzentrats aus flüchtigen Kaffeestoffen auf einen Feuchtigkeitsgehalt von 1% bis 7%.

## Revendications

1. Un procédé pour la fabrication d'un concentré de matières volatiles de café à partir de café grillé et moulu, caractérisé par:

(1) l'humectation d'un café grillé et moulu ayant une grosseur de particules de 1000 microns à 3500 microns avec 0,1 à 0,9 partie d'eau par partie de café;

(2) la désorption du café grillé et moulu humecté opérée dans un lit fluidisé, ledit café humecté étant à un niveau d'humidité de 15 à 65%, à une température de −12°C à 52°C et sous une pression de 5 à 100 mm Hg;

(3) la condensation des matières volatiles en deux fractions, la première à une température de 0°C à 52°C sous une pression de 5 à 100 mm de mercure, et la seconde soit à une température inférieure à −73°C et sous une pression absolue de 1 à 100 mm de mercure, soit à une température de −18°C à −196°C et sous une pression absolue de 760 à 8000 mm de mercure, et

(4) la combinaison des deux condensats avec du café soluble pour l'obtention d'un concentré de matières volatiles de café ayant une concentration en solides de 20 à 65%.

2. Un procédé selon la revendication 1, caractérisé par l'opération supplémentaire d'extraction du café grillé et moulu désorbé pour l'obtention d'une solution de matières solubles de café ayant une concentration en solides de 13 à 26%.

3. Un procédé selon la revendication 1 ou 2, caractérisé en ce que le niveau d'humidité du café humecté est pendant l'opération de désorption (2) de 20 à 55% et de préférence de 30 à 50%.

4. Un procédé selon l'une quelconque des revendications 1 à 3, caractérisé en ce que l'opération de désorption (2) comprend la mise du café grillé et moulu humecté en contact avec 0,05 à 0,5 partie de vapeur d'eau, sous une pression de 5 à 100 mm de Hg et à une température de −12° à 52°C.

5. Un procédé selon l'une quelconque des revendications 1 à 4, caractérisé en ce qu'on maintient le lit fluidisé humecté de café humecté à une température de 21 à 52°C et sous une pression de 20 à 100 mm de mercure.

6. Un procédé selon l'une quelconque des revendications 1 à 5, caractérisé en ce que la condensation de la première fraction des matières volatiles a lieu à une température de 0 à 21°C.

7. Un procédé selon la revendication 6, caractérisé en ce que la condensation de la première fraction des matières volatiles a lieu à une température de 0 à 70°C.

8. Un procédé selon l'une quelconque des revendications 1 à 7, caractérisé par l'opération supplémentaire d'équilibration du concentré de matières volatiles de café en vue de l'élimination de l'anhydride carbonique.

9. Un procédé selon la revendication 8, caractérisé par l'opération supplémentaire de lyophilisation du concentré de matières volatiles de café jusqu'à un niveau d'humidité de 1 à 7%.